# EUROPEAN PATENT SPECIFICATION

(11) **EP 2 810 194 B1**
(45) Date of publication and mention of the grant of the patent: **29.03.2017**
(21) Application number: 13744274.5
(22) Date of filing: 04.02.2013
(51) Int. Cl.: G06F 17/30

(54) **A METHOD FOR TRACKING USER INTERACTION WITH A WEB PAGE**
VERFAHREN ZUR VERFOLGUNG EINER BENUTZERINTERAKTION MIT EINER WEBSEITE
PROCÉDÉ DE SUIVI D'INTERACTION UTILISATEUR AVEC UNE PAGE WEB

(30) Priority: 03.02.2012 SE 1250079
(43) Date of publication of application: 10.12.2014
(73) Proprietor: Innometrics AB, 111 37 Stockholm (SE)
(72) Inventor: Agerberg, Jens, S-113 62 Stockholm (SE)
(74) Representative: Ström & Gulliksson AB
(86) International application number: PCT/SE2013/050090
(87) International publication number: WO 2013/115724

(56) References cited:
- WO-A2-2008/024706
- US-A1- 2002 099 812
- US-A1- 2006 123 015
- US-A1- 2008 040 473
- US-A1- 2008 040 473
- US-A1- 2008 046 562
- US-A1- 2008 228 863
- US-A1- 2009 100 154
- US-A1- 2010 192 054
- 'JQUERY.GETSCRIPT()' 01 January 2010, XP008174234 Retrieved from the Internet: <URL:http://wayback.archive.org/web/2012012 9201509/http://api.jqu ery.com/jQuery.getScript>

## Description

### TECHNICAL FIELD OF THE INVENTION

The present invention generally relates to the field of tracking user interaction between a user device and a web site, the web site and the user device being connected to a common network. The tracking method may be made in real time and without the need to tag every object on the web site that is to be tracked.

### DESCRIPTION OF RELATED ART

The development of Internet or the World Wide Web has exploded the last decade and web site owners are using more and more sophisticated methods to gather information about how users are behaving on their particular web site. This is called web analytics, which is defined as the measurement, collection, analysis and reporting of internet data for purposes of understanding and optimizing web usage. Today there are more or less two different approaches to collect web analytics, namely log file analysis and page tagging.

When performing log file analysis every transaction that is made between the client and the web server is recorded, i.e. log file analysis requires handling of large volumes of data. This large volume of data makes it difficult to perform web analytics in real time. Another problem with log file analysis is data that is downloaded from the web server into the browser memory of the client. This might be the case if one for example uses Asynchronous JavaScript and XML (AJAX). AJAX is a web development technique which makes it possible to create interactive web applications. When downloading data into the web browser it is possible for a user to interact with a web page without carrying out any transactions between the client and the server. This means that all transactions that are performed by the client only, i.e. without making any call to the web server, are lost when performing log file analysis. Thus, there are two major drawbacks when using log file analysis, firstly the time lag between the collection of data and the result of the analysis and secondly the incompleteness that may occur when using for instance AJAX pages.

The other and most common approach today is JavaScript page tagging. A page tag is a small piece of JavaScript code that may be placed on each web page of a web site in order to gather information about the behaviour of a visitor. Every time a web page is requested it automatically runs the JavaScript code in the web browser and sends information to a remote server. The gathered data may then be used to map user behaviour on the particular web page. Usually each web page contains JavaScript code that automatically detects the page Uniform Resource Locator (URL), the page title, the user IP address and the user browser. All other user behaviour for which one would like to gather information, such as content naming, user input, dynamic content, e-commence transactions etc. needs to be tagged. This means that the JavaScript has to be customized in a format dictated by the Application Programming Interface (API) of the web analytics solution and inserted in appropriate places in the technical platform behind the web pages. Thus tagging may be quite time consuming and tie up IT resources if one wants to gather detailed information regarding user behaviour relating to many different items on a web page.

To better understand tagging and its relation to designing web pages the process of developing a complex web site is to be described. A web site has a technical platform that is maintained by the IT department which corrects bugs, adds content and features, all grouped into releases that are regularly published, for instance every or every second month. Given this release process the marketing department may request the IT department to tag web pages such that they may obtain the information that they are interested in. The tags are then incorporated in the new release that will be implemented and validated. This process is usually repeated for every new release of the technical platform. New content and features will of course lead to new requests from the marketing department in order to understand the user interaction of these new parts of the website. As mentioned above this process will tie up IT resources, since the IT department also needs to spend time tagging the web pages and not only develop the technical platform. Another drawback with this process is also that it will take a long time to market from the time the marketing department decides to track a specific behaviour until a corresponding tag is implemented in a new release. All change requests regarding tagging made by the marketing department may also be difficult to handle without any delays.

However, even if page tagging has drawbacks it also has some advantages especially compared to log file analysis. Typically tagging will result in a smaller data set compared to log file analysis. The information may therefore be sent directly to a tracking server and then processed by either the web page owner or by any web analytics company. The tagging approach will work fine but is time-consuming. If the content on the web pages is static the tagging has to be applied by manually enumerating objects in the static page that the user wants to associate with a user interaction. If the content is dynamic tagging requires an integration deep in the application logic so that the application server can generate tags associated with different types of dynamic content at the same moment the content is generated.

WO2008/020941 discloses a method for tracking user interaction with an interactive web application that is associated with a web page. The web application is an AJAX-enabled application. Thus, WO2008/020941 is directed towards solving the problem with gathering information from dynamic web pages or applications. This is done by providing modified HTML elements (tags) that are to be used with the web page. The default behaviour of these modified HTML elements includes a call to a tracking server. The interactive web application associated with the web page includes at least one of the modified HTML elements. User information is then sent to the tracking server. The modified HTML elements may be comprised in an "include file" of the web page. Even if WO2008/020941 solves the problem with gathering information from a dynamic page it still has the drawback that one has to tag and indicate which information that should be collected and sent back to the tracking server by using the include file. In one embodiment one does not need to tag each individual object but may tag groups of objects, such as all hyperlinks etc.

Thus, WO2008/020941 has solved one problem associated with prior art techniques, but there are still room for improvements and especially when it comes to the time it takes to tag web pages. In prior art the general approach to gathering user information has been to tag web pages, which tags then have pushed information from the web page to a tracking server. There clearly is a need to find a way to reduce the time consuming page tagging and still be able to gather detailed information about user behaviour on a web page.

### SUMMARY OF THE INVENTION

Hence, it is an object of the present invention to overcome the above-identified deficiencies related to the prior art and provide a tracking method and system that is independent of page tagging and where new tracking may be added without any delays. According to a first aspect of the invention this object is achieved with a method for tracking user interaction between a user device and a web site, said web site and the user device being connected to a common network. The method provides the web site with a call file. The call file comprises a pointer to a tracking file provided somewhere within the common network. The web site connects to the tracking file as specified in the call file and includes it on the web site in response to user interaction. Data relating to the user interaction between the user device and the web site is extracted as specified in the tracking file. The extracted data is converted to a data format that is readable by a client information system software provided somewhere within the common network and the converted data is then used to map the behaviour of the user device.

According to a preferred embodiment of the method as in claim 1 of the present invention the data is converted to a data format that is readable by a web analytics software provided on a web analytical server and then sent to the web analytical server. Data is extracted using client-side environment variables, event listeners, and access to the Document Object Model as well as user behaviour from previous sessions that are stored in the system. Furthermore, the step of extracting data may comprise the step of executing tracking rules that are part of the tracking file and the extracted data may be converted by using code in a library that is a part of the tracking file.

According to a second aspect of the invention this object is achieved with a system as in claim 5 for tracking user interaction between a user device and a web site, said web site and the user device being connected to a common network. The system is configured to perform the method which provides the web site with a call file. The call file comprises a pointer to a tracking file provided somewhere within the common network. The web site connects to the tracking file as specified in the call file and includes it on the web site. Data relating to the user interaction between the user device and the web site is extracted as specified in the tracking file. The extracted data is converted to a data format that is readable by a client information system software provided somewhere within the common network and the converted data is then used to map the behaviour of the user device.

According to a preferred embodiment of the system of the present invention the extracted data is converted to a data format that is readable by web analytics software provided on a web analytic server, and then sent to the web analytic server. In yet another embodiment of the present invention data is extracted using client-side environment variables, event listeners, and access to the Document Object Model as well as user behaviour from previous sessions that are stored in the system. Furthermore, the system is configured such that the step of extracting data may comprise the step of executing tracking rules that are part of the tracking file and such that the extracted data may be converted by using code in a library that is a part of the tracking file.

According to a third aspect of the invention this object is achieved by computer program as in claim 9 for tracking user interaction between a user device and a web site, said web site and the user device being connected to a common network. The computer program comprises computer program code which, when run in a processing unit of a server, causes the system as described above to perform the method according to the first aspect of the invention.

The present invention is also directed to a computer program product as in claim 11 which comprises a computer program according to the third aspect and a computer readable means on which the computer program is stored.

### BRIEF DESCRIPTION OF THE DRAWINGS

The present invention will now be described in more detail in relation to the enclosed drawings, in which:
Figure 1 shows a schematic view of servers and clients connected to a common network according to the present invention,
Figure 2 schematically shows the tracking server and its different components,
Figure 3 schematically shows a web site and its main template provided with call file,
Figure 4 shows a flow chart showing the steps of the method according to the present invention, and
Figure 5 schematically shows one example of a computer program product comprising computer readable means.

### DETAILED DESCRIPTION OF EMBODIMENTS

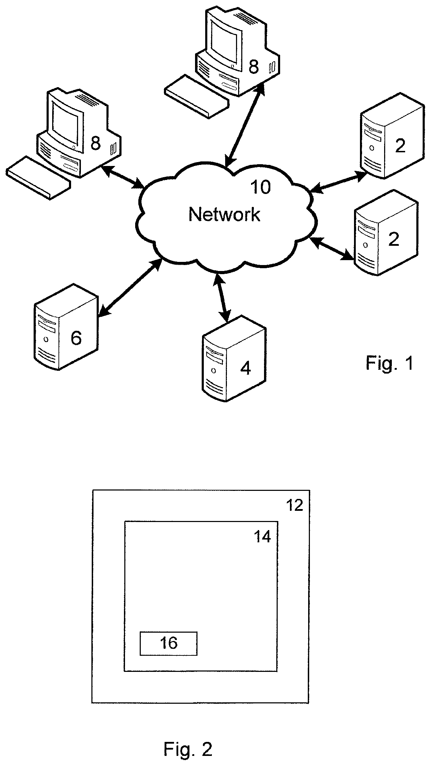

The present invention will now be described with help of different embodiments thereof. Figure 1 shows a schematic view of servers and clients connected to a common network according to the present invention. The system or setup comprises one or more web servers 2 on which one or more web sites 12 (Figure 2) are provided. The web servers 2 are connected to a common network 10 such as Internet, through which they are accessible by other servers and clients or user devices. Other servers that may be connected to the network 10 are a tracking server 4 and a web analytic server 6. Furthermore in the example depicted in Figure 1 two clients or user devices 8 are connected to the network 10. It should be understood that Figure 1 is very schematic and it is obvious to a person skilled in the art that there are many more user devices and servers connected to the network in reality, especially if the network is Internet. Thus, Figure 1 is only used to illustrate the basic principles of the present invention.

It is the user interaction between a user device 8 and a web site 12 provided on the web server 2 that the present invention tracks in a new and inventive way. The heart of the system is the tracking server 4 that is schematically shown in Figure 2. The tracking server 4 comprises a processing unit 18, a tracking file 20 comprising tracking rules 22 and a library 24 with code for converting tracking rules to web analytic variables readable by web analytic software, such as Google Analytics. The library 24 also comprises code for triggering the tracking of user interaction or behavior according to the tracking rules. The tracking server 4 further comprises a control unit 26 for controlling the tracking server 4. It should be understood that Figure 2 is only a schematic view of a tracking server 2 and that it may contain a lot of additional functionality such as memory devices, in- and output devices etc., which are all well known to a skilled person in the art and are therefore not described in any more detail. Even though it is convenient and practical to provide the tracking file 20 on the tracking server 4 it is not necessary in order to practice the present invention. The tracking file 20 may be provided on any server connected to the network 10 and as long as it is accessible by the tracking server 4.

As mentioned above the tracking file 20 comprises tracking rules 22. The tracking rules 22 define which user behavior that is to be tracked and extracted in order to perform web analytics. An example of tracking rules 22 is for example the following:
Track user interaction "click" with the
Hyperlink with anchor text "link 1"
On page having URL www.swordfishinc.com
But only if the user is signed in as indicated by the presence of "status: signed in" in the header bar
only the first time for a particular user and
only if user comes from Google.

As is understood by a person skilled in the art the tracking rules 22 may be directed to any behavior that one wants to track by specifying different tracking rules 22 and combinations thereof. The tracking rules 22 are easy to update either by an input/output device connected directly to the tracking server 4 or by using a user device 8 that is allowed to login on the tracking server 4. Thus, compared to the traditional way of tracking user behavior, where tags have to be directly incorporated in the JavaScript of the web site 12 or web page, the tracking rules 22 according to the present invention are created independently of the web site 12. By independently is meant that they are not integrated in the main template 14 of the web site 12 but are provided somewhere outside the web site 12. This will give some great advantages compared to prior art which will be described closer below.

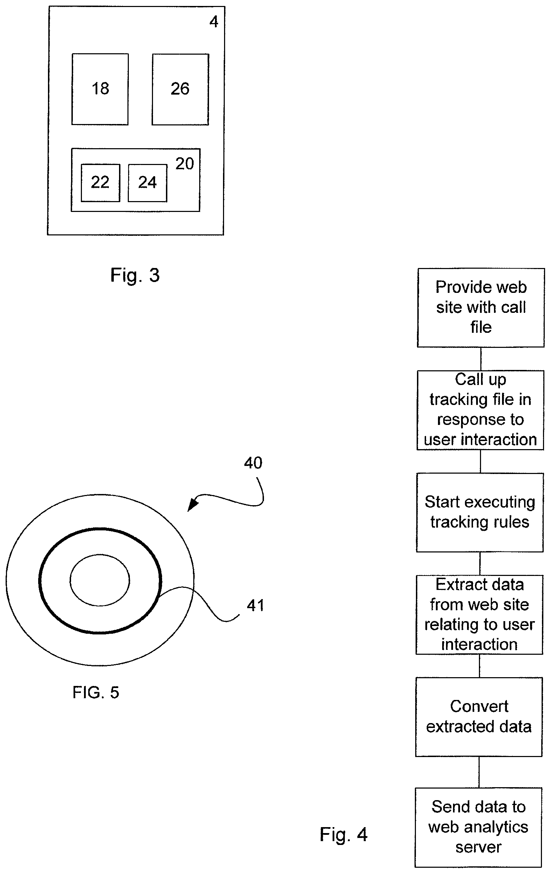

Another important feature according to the present invention is that the web site 12 of interest, i.e. the web site 12 on which the user interaction is to be tracked, is provided with a call file 16. This is schematically shown in Figure 3, in which 12 denotes the web site and 14 the main template of the web site 12. The call file 16 is included in the main template, and is specific for each web site 12 but the same for all pages within a specific the web site 12. The call file 16 comprises a path to the tracking file 20, i.e. the tracking file 20 may be seen as included on the pages. The tracking file 20 is available somewhere within the common network 10. The inclusion of the tracking file 20 on the web site 12 signifies that the web browser is given the instruction to load and process or example a JavaScript file. Data relating to the user interaction between the user device 8 and the web site 12 is then extracted as specified in the tracking file 20. Thus, the function of the call file 16 is to show the path to where the tracking file 20 is stored. This path lets the web site 12 access the tracking file 20 to execute the tracking rules 22, which starts the extraction of data relating to the user interaction with the web site 12 or web page. The extracted data is then converted to a format that is readable by web any client information system software such as web analytics software. It will probably be most common to use the extracted data to perform web analytics, but the date may also be used directly by the web browser such that it triggers suitable offers to a person visiting the web site that is dependable on user behavior.

With reference to Figure 4 the method according to the present invention will now be described. As mentioned above the method is directed towards tracking user interaction between the user device 8 and the web site 12 or web page. In context of the present invention the user device may be any device connectable to the network 10, such as personal computers, laptops, tablet PCs, smart phones and the like.

The method starts with providing the web site 12 or the web page with a call file 16. The call file 16 is as mentioned above included or a part of the main template 14 of the web site 12. The call file 16 includes the path or a pointer directed towards the tracking file 20 that is accessible through the common network 10. Thus, by including a call file 16 in the main template 14 the tracking file 20 will be called upon every time a user enters the web site 12.

Thus, in the next step the web site 12 will connect to the tracking file 20 in response to user interaction. Normally this user interaction is when a user enters a web site, but could also be when the user enters a specific page of the web site. It is believed to be within the capabilities of a person skilled in the art to determine what triggers the connection to the tracking file 20. The tracking file 20 starts executing the tracking rules 22. The tracking rules 22 define which data to extract from the web site 12 as mentioned above. The extraction of data is done by using the page context, content matching selectors, stored interactions by the user in previous pages or sessions and/or other conditions defined by the tracking rules 22. One preferred way to extract data according to the present invention is by using a Document Object Model in order to gather environment variables and user behaviour from previous sessions that are stored in the system and capture user interactions. The data extracted is then converted by using the code stored JavaScript library 24. The conversion is made in order to put the extracted data in a format that is readable by web analytics software. The converted data is then sent to the web analytic server 6, in which the user interaction with the particular web site 12 is analyzed.

With reference to Figure 5 the present invention also relates to a computer program product 40 comprising a computer program 41 for tracking user interaction between a user device 8 and a web site 12, said web site 12 and the user device 8 being connected to a common network 10. The computer program 41 comprises computer program code which, when run in the processing unit 18 of the tracking server 4 or any other suitable server, causes the system to perform the method described above. The computer program 41 is stored on a computer readable means.

Compared to the traditional way, i.e. page tagging, to extract data relating to user behavior the method and system according to the present invention has many benefits and advantages. As described above in the section of related art page tagging requires the web page or web site to be tagged which requires IT resources. Thus, the page tagging is normally only updated once a month or the like. One could describe the philosophy behind page tagging as pushing (sending) data relating to user behavior from the web site to a tracking server. The philosophy behind the present invention is the opposite. In the present invention the tracking file pulls (extracts) data from the web site to the tracking server or to any other server where the tracking file might be stored. The great advantage with this solution is that it is easy to update the tracking rules since they are not dependent of the web site as page tagging is. Thus, it is easy to track user behavior to every change made to the web site without time consuming page tagging.

Given the above description of the present invention it is believed that a person skilled in the art may implement the method by programming the controller in a suitable manner.

## Claims

1. A method for tracking user interaction between a user device (8) and a web site (12), said web site (12) and the user device (8) being connected to a common network (10), the method comprising the steps of:
providing the web site (12) with a call file (16), comprising a pointer to a tracking file (20) provided somewhere within the common network (10),
connecting the web site (12) to the tracking file (20) as specified in the call file (16) and including it in the web site (12), said tracking file (20) comprising tracking rules (22),
extracting data relating to the user interaction between the user device (8) and the web site (12) based on user behaviour from previous sessions that are stored in a system comprising at least a tracking server (4), the user device (8) and the web site (12) by executing the tracking rules (22),
converting the extracted data to a data format that is readable by a web analytics software provided on a web analytical server (6) and sending said data to the web analytical server (6), and
using the converted data to map the behaviour of the user device (8).

2. Method according to claim 1, wherein the extracted data is used by a web browser of the user device (8) for triggering an offer to a user visiting the web site (12).

3. Method according to claim 1 or 2, wherein the data is extracted using client-side environment variables, event listeners, and/or access to a Document Object Model.

4. Method according to any of the preceding claims, wherein the extracted data is converted by using code in a library (24) that is a part of the tracking file (22).

5. A system for tracking user interaction between a user device (8) and a web site (12), said web site (12) and the user device (8) being connected to a common network (10), wherein the system at least comprises a tracking server (4), the user device (8) and the web site (12), said system being configured to perform the following steps:
providing the web site (12) with a call file (16), comprising a pointer to a tracking file (20) provided somewhere within the common network (10),
connecting the web site (12) to the tracking file (20) as specified in the call file (16) and including it in the web site (12) in response to user interaction, said tracking file (20) comprising tracking rules (22),
extracting data relating to the user interaction between the user device (8) and the web site (12) based on user behaviour from previous sessions that are stored in the system by executing the tracking rules (22),
converting the extracted data to a data format that is readable by a web analytics software provided on a web analytical server (6) and sending said data to the web analytical server (6), and
using the converted data to map the behaviour of the user device (8).

6. A system according to claim 5, further configured to let a web browser of the user device (8) use the extracted data for triggering an offer to a user visiting the web site (12).

7. A system according to claim 5 or 6, further configured to perform data extraction by using client-side environment variables, event listeners, and/or access to a Document Object Model.

8. A system according to any of claims 5 to 7, further configured to perform data conversion by using code in a library (24) that is a part of the tracking file (22).

9. A computer program (41) for tracking user interaction between a user device (8) and a web site (12), said web site (12) and the user device (8) being connected to a common network (10), the computer program comprising computer program code which, when run in a processing unit (18) of a server, causes a system comprising a tracking server (4), a web site (2), user device (8) and a web analytic server (6) to:
provide the web site (12) with a call file (16), comprising a pointer to a tracking file (20) provided somewhere within the common network (10),
connect the web site (12) to the tracking file (20) as specified in the call file (16) and include it in the web site (12) in response to user interaction, said tracking file (20) comprising tracking rules (22),
extract data relating to the user interaction between the user device (8) and the web site (12) based on user behaviour from previous sessions that are stored in the system by executing the tracking rules (22),
convert the extracted data to a data format that is readable by a web analytics software provided on a web analytical server (6) and send said data to the web analytical server (6), and
use the converted data to map the behaviour of the user device (8).

10. A computer program (41) according to claim 9, further causing the system to let a web browser of the user device (8) use the extracted data for triggering an offer to a user visiting the web site (12).

11. A computer program product (40) comprising a computer program (41) according claim 9 or 10 and a computer readable means on which the computer program is stored.

## Patentansprüche

1. Ein Verfahren zum Nachverfolgen einer Nutzerinteraktion zwischen einer Nutzereinrichtung (8) und einer Website (12), wobei die Website (12) und die Nutzereinrichtung (8) mit einem gemeinsamen Netzwerk (10) verbunden sind, wobei das Verfahren die folgenden Schritte aufweist:
Versehen der Website (12) mit einer Aufrufdatei (16), die einen Pointer bzw. Zeiger zu einer Nachverfolgungsdatei (20), die irgendwo innerhalb des gemeinsamen Netzwerkes (10) vorgesehen ist, aufweist,
Verbinden der Website (12) mit der Nachverfolgungsdatei (20), wie in der Aufrufdatei (16) spezifiziert ist, und Aufnehmen dieser in die Website (12) wobei die Nachverfolgungsdatei (20) Nachverfolgungsregeln (22) aufweist, Extrahieren von Daten bezüglich der Nutzerinteraktion zwischen der Nutzereinrichtung (8) und der Website (12) basierend auf Nutzerverhalten aus vorherigen Sitzungen, die in einem System gespeichert sind, das wenigstens einen Nachverfolgungsserver (4), die Nutzereinrichtung (8) und die Website (12) aufweist, durch Ausführen der Nachverfolgungsregeln (22), Konvertieren der extrahierten Daten in ein Datenformat, das durch eine Webanalysesoftware gelesen werden kann, die auf einem Webanalyseserver (6) vorgesehen ist und Senden der Daten an den Webanalyseserver (6), und Verwenden der konvertierten Daten zum Abbilden des Verhaltens der Nutzereinrichtung (8).

2. Verfahren nach Anspruch 1, wobei die extrahierten Daten durch einen Webbrowser der Nutzereinrichtung (8) verwendet werden zum Auslösen eines Angebots an einen Nutzer, der die Website (12) besucht.

3. Verfahren nach Anspruch 1 oder 2, wobei die Daten extrahiert werden unter Verwendung Client-seitiger Umgebungsvariablen bzw. Client-Side Environment Variables, Ereignis- bzw. Event-Listeners und/oder Zugriff auf ein Dokumentobjektmodell bzw. Document Object Model.

4. Verfahren nach einem der vorhergehenden Ansprüche, wobei die extrahierten Daten durch Verwenden von Code in einer Bibliothek bzw. Library (24) konvertiert werden, die ein Teil der Nachverfolgungsdatei (22) ist.

5. Ein System zum Nachverfolgen einer Nutzerinteraktion zwischen einer Nutzereinrichtung (8) und einer Website (12), wobei die Website (12) und die Nutzereinrichtung (8) mit einem gemeinsamen Netzwerk (10) verbunden sind, wobei das System wenigstens einen Nachverfolgungsserver (4), die Nutzereinrichtung (8) und die Website (12) aufweist, wobei das System konfiguriert ist zum Durchführen der folgenden Schritte:
Versehen der Website (12) mit einer Aufrufdatei (16), die einen Pointer bzw. Zeiger zu einer Nachverfolgungsdatei (20), die irgendwo innerhalb des gemeinsamen Netzwerkes (10) vorgesehen ist, aufweist,
Verbinden der Website (12) mit der Nachverfolgungsdatei (20), wie in der Aufrufdatei (16) spezifiziert ist, und Aufnehmen dieser in die Website (12) ansprechend auf eine Nutzerinteraktion, wobei die Nachverfolgungsdatei (20) Nachverfolgungsregeln (22) aufweist,
Extrahieren von Daten bezüglich der Nutzerinteraktion zwischen der Nutzereinrichtung (8) und der Website (12) basierend auf Nutzerverhalten aus vorherigen Sitzungen, die in dem System gespeichert sind, durch Ausführen der Nachverfolgungsregeln (22),
Konvertieren der extrahierten Daten in ein Datenformat, das durch eine Webanalysesoftware gelesen werden kann, die auf einem Webanalyseserver (6) vorgesehen ist, und Senden der Daten an den Webanalyseserver (6), und Verwenden der konvertierten Daten zum Abbilden des Verhaltens der Nutzereinrichtung (8).

6. System nach Anspruch 5, das weiter konfiguriert ist zuzulassen, dass ein Webbrowser der Nutzereinrichtung (8) die extrahierten Daten zum Auslösen eines Angebots an einen Nutzer, der die Website (12) besucht, verwendet.

7. System nach Anspruch 5 oder 6, das weiter konfiguriert ist zum Durchführen von Datenextraktion durch Verwendung Client-seitiger Umgebungsvariablen bzw. Client-Side Environment Variables, Ereignis- bzw. Event-Listeners und/oder Zugriff auf ein Dokumentobjektmodell bzw. Document Object Model.

8. System nach einem der Ansprüche 5 bis 7, das weiter konfiguriert ist zum Durchführen von Datenkonvertierung durch Verwenden von Code in einer Bibliothek bzw. Library (24), die ein Teil der Nachverfolgungsdatei (22) ist.

9. Ein Computerprogramm (41) zum Nachverfolgen einer Nutzerinteraktion zwischen einer Nutzereinrichtung (8) und einer Website (12), wobei die Website (12) und die Nutzereinrichtung (8) mit einem gemeinsamen Netzwerk (10) verbunden sind, wobei das Computerprogramm Computerprogrammcode aufweist, der, wenn er in einer Verarbeitungseinheit (18) eines Servers ausgeführt wird, ein System, das einen Nachverfolgungsserver (4), eine Website (2), eine Nutzereinrichtung (8) und einen Webanalyseserver (6) aufweist, zu Folgendem veranlasst:
Versehen der Website (12) mit einer Aufrufdatei (16), die einen Pointer bzw. Zeiger zu einer Nachverfolgungsdatei (20), die irgendwo innerhalb des gemeinsamen Netzwerkes (10) vorgesehen ist, aufweist,
Verbinden der Website (12) mit der Nachverfolgungsdatei (20), wie in der Aufrufdatei (16) spezifiziert ist, und Aufnehmen dieser in die Website (12), ansprechend auf die Nutzerinteraktion, wobei die Nachverfolgungsdatei (20) Nachverfolgungsregeln (22) aufweist,
Extrahieren von Daten bezüglich der Nutzerinteraktion zwischen der Nutzereinrichtung (8) und der Website (12) basierend auf Nutzerverhalten aus vorherigen Sitzungen, die in dem System gespeichert sind, durch Ausführen der Nachverfolgungsregeln (22),
Konvertieren der extrahierten Daten in ein Datenformat, das durch eine Webanalysesoftware gelesen werden kann, die auf einem Webanalyseserver (6) vorgesehen ist und Senden der Daten an den Webanalyseserver (6), und Verwenden der konvertierten Daten zum Abbilden des Verhaltens der Nutzereinrichtung (8).

10. Ein Computerprogramm (41) nach Anspruch 9, das weiter veranlasst, dass das System zulässt, dass ein Webbrowser der Nutzereinrichtung (8) die extrahierten Daten zum Auslösen eines Angebots an einen Nutzer, der die Website (12) besucht, verwendet.

11. Ein Computerprogrammprodukt (40), das ein Computerprogramm (41) nach Anspruch 9 oder 10 und von einem Computer lesbare Mittel, auf welchen das Computerprogramm gespeichert ist, aufweist.

## Revendications

1. Procédé pour suivre l'interaction d'un utilisateur entre un dispositif utilisateur (8) et un site Web (12), ledit site Web (12) et le dispositif utilisateur (8) étant connectés à un réseau commun (10), le procédé comprenant les étapes suivantes:
fournir au site Web (12) un fichier d'appel (16), comprenant un pointeur vers un fichier de suivi (20) pourvu quelque part dans le réseau commun (10),
connecter le site Web au fichier de suivi (20) comme spécifié dans le fichier d'appel (16) et l'inclure dans le site Web (12), ledit fichier de suivi (20) comprenant des règles de suivi (22),
extraire des données relatives à l'interaction de l'utilisateur entre le dispositif utilisateur (8) et le site Web (12) sur la base du comportement de l'utilisateur à partir de sessions précédentes qui sont stockées dans un système comprenant au moins un serveur de suivi (4), le dispositif utilisateur (8) et le site Web (12) en exécutant les règles de suivi (22),
convertir les données extraites en un format de données qui est lisible par un logiciel analytique Web pourvu sur un serveur analytique Web (6) et envoyer lesdites données au serveur analytique Web (6), et
utiliser les données converties pour cartographier le comportement du dispositif utilisateur (8).

2. Procédé selon la revendication 1, dans lequel les données extraites sont utilisées par un navigateur Web du dispositif utilisateur (8) pour déclencher une offre à l'attention d'un utilisateur visitant le site Web (12).

3. Procédé selon la revendication 1 ou la revendication 2, dans lequel les données sont extraites au moyen de variables d'environnement côté client, de détecteurs d'événements et/ou d'accès à un modèle DOM.

4. Procédé selon l'une quelconque des revendications précédentes, dans lequel les données extraites sont converties au moyen d'un code dans une bibliothèque (24) qui fait partie du fichier de suivi (22).

5. Système pour suivre l'interaction d'un utilisateur entre un dispositif utilisateur (8) et un site Web (12), ledit site Web (12) et le dispositif utilisateur (8) étant connectés à un réseau commun (10), où le système comprend au moins un serveur de suivi (4), le dispositif utilisateur (8) et le site Web (12), ledit système étant configuré pour exécuter les étapes suivantes :
fournir au site Web (12) un fichier d'appel (16), comprenant un pointeur vers un fichier de suivi (20) pourvu quelque part dans le réseau commun (10),
connecter le site Web (12) au fichier de suivi (20) comme spécifié dans le fichier d'appel (16) et l'inclure dans le site Web (12) en réponse à l'interaction de l'utilisateur, ledit fichier de suivi (20) comprenant des règles de suivi (22),
extraire des données relatives à l'interaction de l'utilisateur entre le dispositif utilisateur (8) et le site Web (12) sur la base du comportement de l'utilisateur à partir de sessions précédentes qui sont stockées dans un système en exécutant les règles de suivi (22),
convertir les données extraites en un format de données qui est lisible par un logiciel analytique Web pourvu sur un serveur analytique Web (6) et envoyer lesdites données au serveur analytique Web (6), et
utiliser les données converties pour cartographier le comportement du dispositif utilisateur (8).

6. Système selon la revendication 5, configuré en outre pour laisser un navigateur Web du dispositif utilisateur (8) utiliser les données extraites pour déclencher une offre à l'attention d'un utilisateur visitant le site Web (12).

7. Système selon la revendication 5 ou la revendication 6, en outre configuré pour procéder à une extraction de données au moyen de variables d'environnement côté client, de détecteurs d'événements et/ou d'accès à un modèle DOM.

8. Procédé selon l'une quelconque des revendications 5 à 7, en outre configuré pour procéder à une conversion de données au moyen d'un code dans une bibliothèque (24) qui fait partie du fichier de suivi (22).

9. Programme informatique (41) pour suivre l'interaction d'un utilisateur entre un dispositif utilisateur (8) et un site Web (12), ledit site Web (12) et le dispositif utilisateur (8) étant connectés à un réseau commun (10), le programme informatique comprenant un code de programme informatique qui, lorsqu'il est exécuté sur une unité de traitement (18) d'un serveur, amène un système comprenant un serveur de suivi (4), un site Web (2), un dispositif utilisateur (8) et un serveur analytique Web (6) à:
fournir au site Web (12) un fichier d'appel (16), comprenant un pointeur vers un fichier de suivi (20) pourvu quelque part dans le réseau commun (10),
connecter le site Web (12) au fichier de suivi (20) comme spécifié dans le fichier d'appel (16) et l'inclure dans le site Web (12) en réponse à l'interaction de l'utilisateur, ledit fichier de suivi (20) comprenant des règles de suivi (22),
extraire des données relatives à l'interaction de l'utilisateur entre le dispositif utilisateur (8) et le site Web (12) sur la base du comportement de l'utilisateur à partir de sessions précédentes qui sont stockées dans le système en exécutant les règles de suivi (22),
convertir les données extraites en un format de données qui est lisible par un logiciel analytique Web pourvu sur un serveur analytique Web (6) et envoyer lesdites données au serveur analytique Web (6), et
utiliser les données converties pour cartographier le comportement du dispositif utilisateur (8).

10. Programme informatique (41) selon la revendication 9, amenant en outre le système à laisser un navigateur Web du dispositif utilisateur (8) utiliser les données extraites pour déclencher une offre à l'attention d'un utilisateur visitant le site Web (12).

11. Produit programme informatique (40) comprenant un programme informatique (41) selon la revendication 9 ou 10 et un support lisible par ordinateur sur lequel le programme informatique est stocké.
